# EUROPEAN PATENT SPECIFICATION

(11) **EP 2 755 296 B1**
(45) Date of publication and mention of the grant of the patent: **17.05.2017**
(21) Application number: 13000200.9
(22) Date of filing: 15.01.2013
(51) Int. Cl.: H02J 7/02

(54) **A wireless charger with combined electric radiation shielding and capacitive sensing functions**
Drahtloses Ladegerät mit kombinierter Abschirmung für elektrische Strahlen und kapazitive Fühlungsfunktionen
Chargeur sans fil avec fonctions combinées de détection capacitive et de protection contre les rayonnements électriques

(43) Date of publication of application: 16.07.2014
(73) Proprietor: Lite-On Technology Corporation, Neihu, Taipei 114 (TW); Lite-on Electronics(Guangzhou) Limited, Guangzhou (CN)
(72) Inventor: Graf, Stefan, 35578 Wetzlar (DE); Waldschmidt, Andre, 35578 Wetzlar (DE); Roth, Karsten, 35578 Wetzlar (DE); Lindenstruth, Lars, 35578 Wetzlar (DE)
(74) Representative: Ricker, Mathias

(56) References cited:
- EP-A2- 2 592 715
- US-A1- 2010 156 347
- US-A1- 2011 074 344
- US-A1- 2011 115 433
- US-A1- 2012 212 178

## Description

### BACKGROUND OF THE INVENTION

### 1. Technical Field

The present invention relates to a wireless charger. More particularly, the present invention relates to a wireless charger with combined electric radition shielding and capacitive sensing functions.

### 2. Description of Related Art

Nowadays, complex electronic circuitry is found in all sorts of devices used in the home or other places. Such devices are usually charged by a wired method or contain a battery to provide necessary electricity. However the length of the wires could limit the usage range of the devices and the wires easily get entangled with other wire, causing inconvenience. Therefore, inductive charging (also known as wireless charging) of electronic devices is increasingly popular. The inductive charging is fulfilled by electromagnetic induction. One example is US2012/0212178. A major problem of the wireless charging is electromagnetic interference (EMI). EMI is a common problem which occurs with electronic devices when the performance of a device is disturbed or interrupted by electromagnetic radiation or electromagnetic conduction. The wireless transmission of electric radiation of the inductive charging device (wireless charger) might influence other electronic equipments. Generally, to recognize that there is a chargeable device on the charging pad of the wireless charger, standard wireless charger is pinging all the time which leads to additional EMS (electromagnetic susceptibility) issues. Therefore, there still remains a solution to solve the above mentioned issues.

### SUMMARY OF THE INVENTION

One aspect of the present invention is to provide a wireless charger for charging an electronic device with a second coil, comprising a charging module, which comprises a first coil electromagnetically coupled to the second coil, a placing area for the electronic device to be placed, and a comb-shaped shielding located between the placing area and the first coil; a capacitive sensor, which is connected to the comb-shaped shielding to detect the capacitance varient between the comb-shaped shielding and the environment; a control unit, which is connected to the comb-shaped shielding and the capacitive sensor and records the capacitance varient, wherein when the capacitance varient exceeds a predefined threshold, the control unit sends a ping signal to the electronic device, and if the electronic device responds, the control unit switches the charging module from a standby mode to a charging mode to wireless chage the electronic device and switches the comb-shaped shielding to be connected to the ground.

Another aspect of the present invention is to provide a method for combining electric radiation shielding and capacitive sensing functions to a wireless charger, comprising: (a) detecting a capacitance varient between a comb-shaped shielding of the wireless charger and the environment via a capacitive sensor connected to the comb-shaped shielding in a standby mode; (b) transmitting a ping signal to confirm an electronic device is to be charged when the capacitance varient exceeds a predefined threshold by a controller; (c) switching the comb-shaped shielding to be connected a ground and powering on the wireless charger to perform wireless charging when a response to the ping signal is received in a charging mode; and (d) switching the wireless charger back to the standby mode when the capacitance varient is under the predefined threshold.

### BRIEF DESCRIPTION OF THE DRAWINGS

The accompanying drawings, together with the specificaion, illustrate exemplary embodiments of the present invention, and, together with the description, serve to explain the principles of the present invention.
FIG. 1 is a schematic diagram showing an embodiment of the wireless charger of the invention.
FIG. 2 shows a pictorial drawing of the wireless charger of the invention with a portable electronic device.
FIG. 3 shows a flow chart illustrating an operation of the embodiment of FIG. 1.
FIG. 4 shows a chart of the electric radiation emitted from a wireless charger in a charging mode without the comb-shaped shielding.
FIG. 5 shows a chart of the electric radiation emitted from a wireless charger in a charging mode with the comb-shaped shielding of the present invention.

### DETAILED DESCRIPTION OF THE INVENTION

In the following detailed description, only certain exemplary embodiments of the present invention are shown and described, by way of illustration. As those skilled in the art would recognize, the described exemplary embodiments may be modified in various ways, all without departing from the spirit or scope of the present invention. Accordingly, the drawings and description are to be regarded as illustrative in nature, and not restrictive.

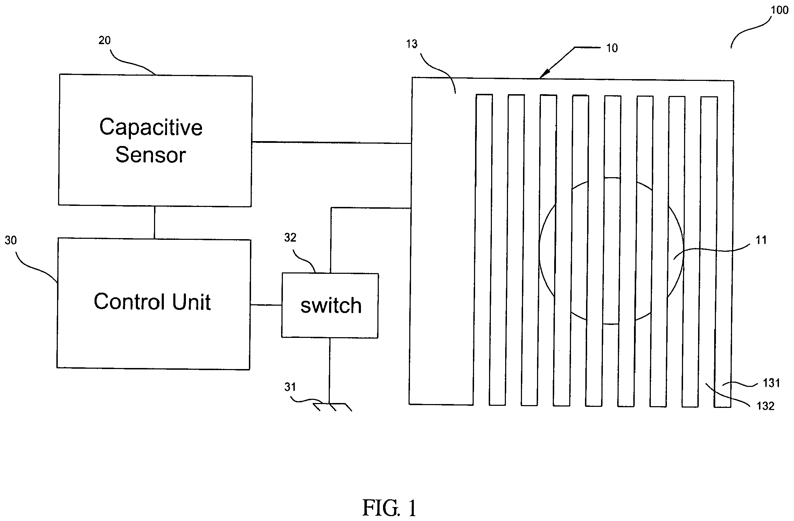

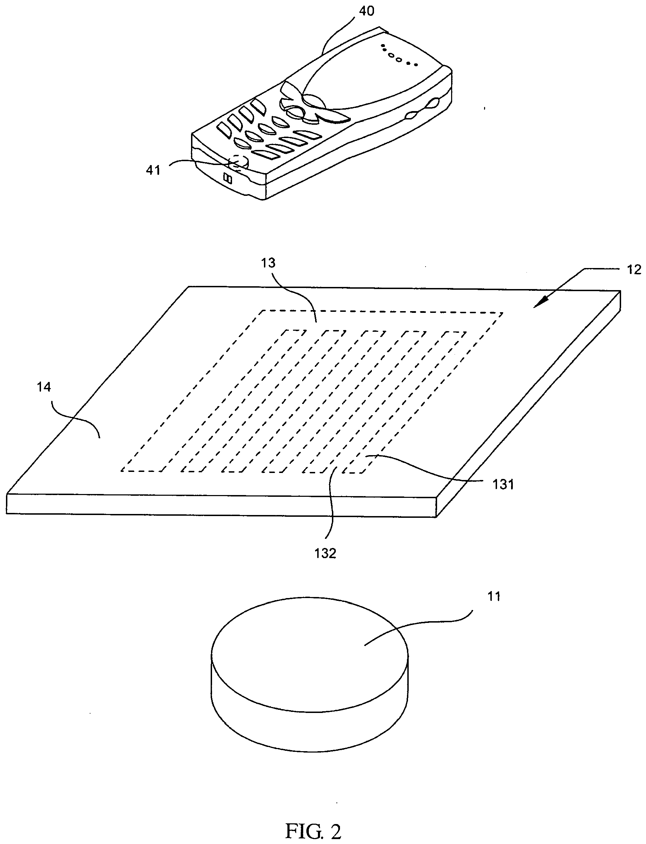

FIG. 1 is a schematic diagram showing an embodiment of the wireless charger **100** of the invention. FIG. 2 shows a pictorial drawing of the wireless charger of the invention with a portable electronic device. The wireless charger **100** is for charging an electronic device **40** wirelessly. In general, the electronic device **40** has a second coil **41** in it so as to take power from the electromagnetic field generated by the wireless charger **100** and convert it into electrical current to charge the battery in the electronic device **40.** As shown in FIG. 1, the wireless charger **100** comprises a charging module **10,** a capacitive sensor **20,** and a control unit **30.** The charging module **10** comprises at least one first coil **11,** a placing area **12,** and a comb-shaped sheilding **13.** The first coil **11** is electromagnetically coupled to the second coil **41** embedded in the electronic device **40,** and may be connected to a power supply. The placing area **12** is for the electronic device **40** to be placed on opposite to the first coil **11** to perform wireless charging, and the comb-shaped shielding **13** is located between the placing area **12** and the first coil **11.**

In an exemplary of the present invention, the wireless charger **100** has two modes, namely, a standby mode and a charging mode. In the standby mode, the comb-shaped shielding **13** is for sensing capacitance; whereas in the charging mode, the comb-shaped shielding **13** is for electric radiation shielding. Thus, a combined electric radiation shielding and capacitive sensing functions to a wireless charger **100** is provided. The conversion of the two modes will discuss below.

The capacitive sensor **20** is connected to the comb-shaped shielding **13** to detect the capacitance varient between the comb-shaped shielding **13** and the environment. In general, the capacitive sensor **20** can directly sense electrical fields. Capacitive sensor **20** may be composed of conductive sensing electrodes, a dielectric, and detection circuits that detect changes in capacitance. The capacitive sensor **20** may be designed as a capacitive sensor integrated circuit (IC). As the comb-shaped shielding **13** is connected to the capacitive sensor **20,** it acts as a capacitive sensor electrode in the standby mode. If an object (electronic device **40**) approaches the comb-shaped shielding **13,** the capacitance between the comb-shaped shielding **13** and the environment changes, and the capacitance varient is detected by the detection circuit of the capacitive sensor **20.**

The control unit **30** is also connected to the comb-shaped shielding **13** and the capatitive sensor **20** to record/store the capacitance varient. When the capacitance varient exceeds a predefined threshold, the control unit **30** sends a ping signal to the electronic device **40.** In this way, the ping operation is started only if the electronic device **40** is approaching. If the electronic device **40** responds, the control unit **30** switches the charging module **100** from a standby mode to a charging mode to wireless charge the electronic device **40** and switches the comb-shaped shielding **13** to be connected to the ground **31.**

The term "ping signal" is any type of wireless signal transmitted from a first interactive wireless device (in the present invention, the first interactive wireless device is the control unit **30**) in order to obtain information from a second interactive wireless device (in the present invention, the second interactive wireless device is the electronic device **40** which is to be charged) within a particular range of the first interactive wireless device. The ping signal is typically a short range signal for communicating with the second interactive wireless devices in a closer region, and may be transmitted from the control unit **30** to the electronic device **40** via the first coil **11.** The second interactive wireless device within range receives the ping signal, and, in response, sends response through a wireless transmission. The response may also include additional information, such as information concerning its remaining power or capabilities, etc. The first interactive wireless device may adjust the wireless charging time according to the remaining power and capability in the battery of the second interactive wireless device.

The term "wireless charging," also called "inductive charging," refers to use an electromagnetic field to transfer energy between two objects (one is the wireless charger **100** and the other is the electronic device **40**). Energy is sent through inductive coupling to the electronic device **40,** which then can use that energy to charge a battery in the electronic device **40** or run the electronic device **40.** Typically, the wireless charger **100** uses the first coil **11** as an induction coil to connect to an alternating current (AC) power supply and to create an alternating electromagnetic field within a charging case station, and the second coil **41** in the electronic device **40** takes power from the electromagnetic field and converts it into electrical current to charge the battery. The two induction coils **11, 41** in proximity combine to form an electrical transformer.

While performing the wireless charging (in charging mode), the H-fields (magnetic fields) charge the electronic device **40,** but the wireless charger **100** also generate E-fields. The E-fields radiate and disturb other devices nearby the wireless charger **100.** The comb-shaped shielding **13** is used as a filter to shield the electric radiation from E-fields and also enables an inductive magnetic (H-fields) coupling to the electronic device **40.** In addition, the shielding ability of the comb-shaped shielding **13** is improved because the control unit **30** switches the comb-shaped shielding **13** to be connected to the ground **31,** thus, the radiated emission is reduced. If the object approaching the wireless charger **100** is not detected as a receiver, such as it does not respond to the ping signal, the control unit **30** keeps the wireless charger **100** in the standby mode. The control unit **30** may further comprise a switch **32,** which is electrically connected between the ground **31** and the comb-shaped shielding **13.** In a preferable embodiment, the switch **32** is a transistor.

The comb-shaped shielding **13,** also called as Farady shield, can be a metal sheet or foils or other materials that are suitable for shielding, which comprises a plurality of parallel segments **131,** and spaces **132** are arranged between each adjacent segments **131.** As a preferable embodiment, the comb-shaped shielding **13** can be printed on a PCB board **14,** to strengthen the stucture or to reduce the use of the metal materials. The comb-shaped shielding **13** can cover the spacings of the first coil **11,** and the combination of two or more comb-shaped shielding **13** with different directions (in relation to the first coil **11** and against each other) and located in different layers are also included in the present invention.

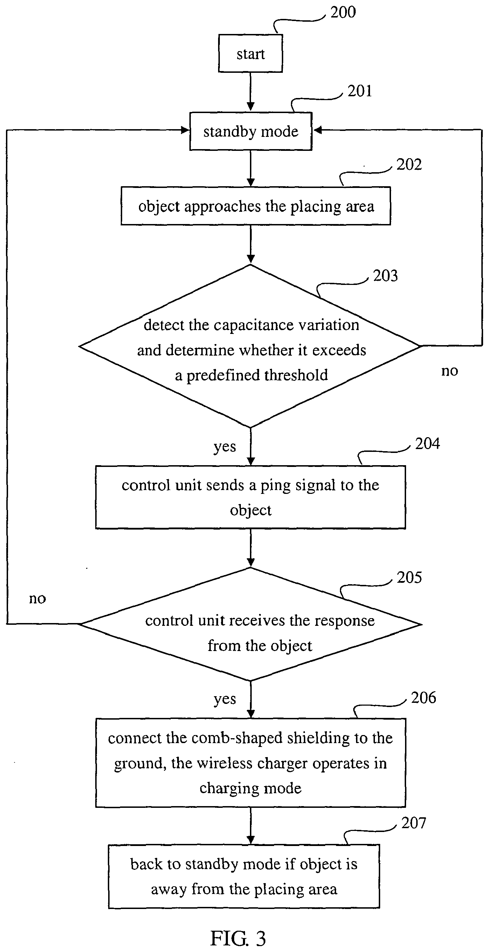

Reffering to FIG. 3, it shows a flow chart illustrating an operation of the embodiment of FIG. 1. As shown in FIG. 3, when the operation starts **200,** the wireless charger **100** will be operated in a standby mode, as shown in the function block **201.** In the standby mode, the comb-shaped shielding **13** is used as a capacitive sensor electrode for the capacitive sensor **20.** By means of the capacitive sensor **20,** it detects the changes of the capacitance between the comb-shaped shielding **13** and the environment (such as an object or the electronic device **40**). Thus, as shown in function block **202** and **203,** if an object approaches the placing area **12** of the wireless charger **100,** the capacitance changes, and the control unit **30** determines whether the capacitance variation exceeds a predefined threshold. If yes, the control unit **30** sends a ping signal to the object which is approaching the placing area **12** to identify whether the object is to be charged. Next, as shown in function block **205,** if the object is to be charged and is adapted with the wireless charging function, the object will send a response to the control unit **30.** As soon as the response is received by the control unit **30,** it switches the wireless charger **100** to a charging mode from the standby mode. In function block **206,** when the wireless charger **100** is in the charging mode, the control unit **30** motivates the comb-shaped shielding **13** to be connected to the ground **31,** and powers on the wireless charger **100** to perform wireless charging. When wireless charging is completed, the object is away from comb-shaped shielding **13,** then the capacitance varient is under the predefined threshold. Thus, the control unit 30 switches the wireless charger 100 back to the standby mode, as shown in function block 207.

In such way, the present invention provides a wireless charger 100 having combined electronic radiation shielding and capacitive sensing functions. Thus, when the wireless charger 100 is under standby mode, the controll unit 30 doest not need to continuously send out ping signals to confirm an object is approaching the wireless charger 100. Rather, approaching of an object is detected by the capatitive sensor **20** using the comb-shaped shielding **13** as a capacitive sensor electrode. In addition, when the wireless charger **100** is in the charging mode, the comb-shaped shielding **13** is connected to the ground **31** and serves as a filter. In other words, the comb-shaped shielding **13** enables the first coil **11** to be inductive magnetic coupled to the second coil **41** (the magnetic line (H-fields) can cross the comb-shaped shielding **13** via the spaces **132**), however, the accompanied electric radiation (E-fields) is shielded. Thus, the radiation emission of E-fields is reduced.

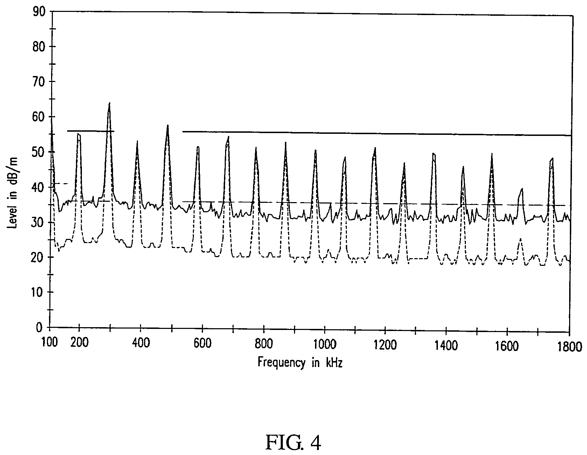

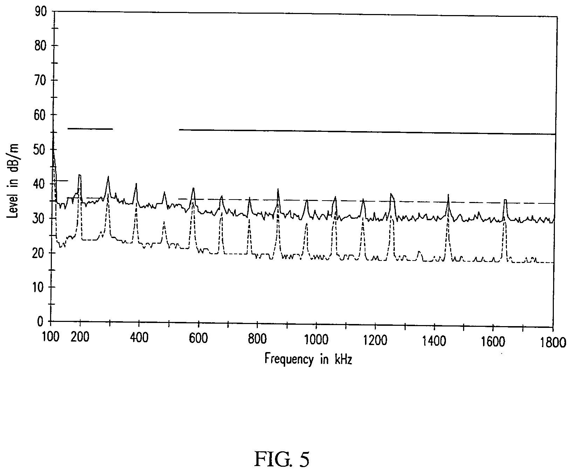

An example was performed to measure the shielding ability of the present invention. FIG. 4 is a chart of the electric radiation emitted from a wireless charger in a charging mode without the comb-shaped shielding. FIG. 5 shows a chart of the electric radiation emitted from a wireless charger in a charging mode with the comb-shaped shielding of the present invention, where the comb-shaped shielding was placed between the charging module and the electronic device. The solid peak lines and the dotted lines in both figures refer to peak detector trace and average detector trace, respectively. The comb-shaped shielding in FIG. 5 is placed transverse to axis of symmetry of the first coil of the charging module. As can be seen from FIG. 4, the electric radiation is significantly above the limited standard of OEM's EMC and EMI specifications in a broad spectrum, whereas there is only a few peaks breaking out the limited standard in FIG. 5. It is proved that the design of the present invention surely can reduce the radiation emission of the E-fields.

The present invention can be used in many different technical fields, such as the the feature of automotive industry, home appliances, consumer electronics, or medical systems.

## Claims

1. A wireless charger (100) for charging an electronic device (40) with a second coil (14), comprising:
a charging module (10), comprising a first coil (11) electro-magnetically coupled to the second coil (14), a placing area (12) for the electronic device (40) to be placed on opposite to the first coil (11), and a comb-shaped shielding (13) located between the placing area (12) and the first coil (11);
a capacitive sensor (20), which is connected to the comb-shaped shielding (13) to detect the capacitance variant between the comb-shaped shielding (13) and the environment; and
a control unit (30), which is connected to the comb-shaped shielding (13) and the capacitive sensor (20) and records the capacitance variant;
wherein, when the capacitance variant exceeds a predefined threshold, the control unit (30) sends a ping signal to the electronic device (40), and if the electronic device (40) responds, the control unit (30) switches the charging module (10) from a standby mode to a charging mode to wireless charge the electronic device (40) and switches the comb-shaped shielding (13) to be connected to a ground (31).

2. The wireless charger (100) of claim 1, wherein the control unit (30) further comprises a switch (32), which is electrically connected between the ground (31) and the comb-shaped shielding (13).

3. The wireless charger (100) of claim 2, wherein the switch (32) is a transistor.

4. The wireless charger (100) of claim 1, wherein the ping signal is sending from the control unit (30) via the first coil (11).

5. The wireless charger (100) of claim 1, wherein the comb-shaped shielding (13) comprises a plurality of parallel segments (131).

6. The wireless charger (100) of claim 1, wherein the comb-shaped shielding (13) is printed as a circuit path on a PCB board.

7. The wireless charger (100) of claim 1, wherein at least two comb-shaped shieldings (13) are used, positioned with different directions against each other and located in different layers of the wireless charger (100).

8. The wireless charger (100) of claim 1, wherein the comb-shaped shielding (13) is used as a capacitive sensor (20) electrode when the wireless charger (100) is in the standby mode.

9. A method for combing electric radiation shielding and capacitive sensing functions to a wireless charger (100), comprising:
(a) detecting a capacitance variant between a comb-shaped shielding (13) of the wireless charger (100) and the environment via a capacitive sensor (20) connected to the comb-shaped shielding (13) in a standby mode;
(b) transmitting a ping signal to confirm an electronic device (40) is to be charged when the capacitance variant exceeds a predefined threshold by a controller;
(c) switching the comb-shaped shielding (13) to be connected to a ground (31) and powering on the wireless charger (100) to perform wireless charging when a response to the ping signal is received in a charging mode; and
(d) switching the wireless charger (100) back to the standby mode when the capacitance variant is under the predefined threshold.

10. The method of claim 9, wherein the wireless charger (100) is connected to a controller to record the capacitance variant and to perform the switch (32) between the standby mode and the charging mode.

11. The method of claim 9, wherein the capacitive sensor (20) is a capacitive sensor integrated circuit.

12. The method of claim 9, wherein the control unit (30) further comprises a switch (32), which is electrically connected between the ground (31) and the comb-shaped shielding (13).

13. The method of claim 12, wherein the switch (32) is a transistor.

14. The method of claim 9, wherein the comb-shaped shielding (13) comprises a plurality of parallel segments (131).

15. The methof of claim 9, wherein the comb-shaped shielding (13) is printed as a circuit path on a PCB board.

16. The method of claim 9, wherein at least two comb-shaped shieldings (13) are used, positioned with different directions against each other and located in different layers of the wireless charger (100).

## Patentansprüche

1. Drahtloses Ladegerät (100) zum Laden einer elektronischen Vorrichtung (40) mit einer zweiten Spule (14), welches aufweist:
ein Lademodul (10), das eine zweite Spule (14), die elektromagnetisch mit der ersten Spule (11) gekoppelt ist, einen Anordnungsbereich (12) für die elektronische Vorrichtung (40), die gegenüber der ersten Spule (11) anzuordnen ist, und eine kammförmige Abschirmung (13) aufweist, die zwischen dem Anordnungsbereich (12) und der ersten Spule (11) angeordnet ist,
einen kapazitiven Sensor (20), der mit der kammförmigen Abschirmung (13) verbunden ist, um die Kapazitätsvariante zwischen der kammförmigen Abschirmung (13) und der Umgebung zu erfassen, und
eine Steuereinheit (30), welche mit der kammförmigen Abschirmung (13) und dem kapazitiven Sensor (20) verbunden ist und welche die Kapazitätsvariante aufzeichnet,
wobei die Steuereinheit (30) ein Ping-Signal an die elektronische Vorrichtung (40) sendet, wenn die Kapazitätsvariante eine vorgegebene Schwelle überschreitet, und wobei, wenn die elektronische Vorrichtung (40) anspricht, die Steuereinheit (30) das Lademodul (10) von einem Bereitschaftsmodus auf einen Lademodus umschaltet, um die elektronische Vorrichtung (40) drahtlos aufzuladen, und die kammförmige Abschirmung (13) umschaltet, um mit einer Masse (31) verbunden zu sein.

2. Drahtloses Ladegerät (100) nach Anspruch 1, wobei die Steuereinheit (30) ferner einen Schalter (32) aufweist, der zwischen der Masse (31) und der kammförmigen Abschirmung (13) elektrisch verbunden ist.

3. Drahtloses Ladegerät (100) nach Anspruch 2, wobei der Schalter (32) ein Transistor ist.

4. Drahtloses Ladegerät (100) nach Anspruch 1, wobei das Ping-Signal von der Steuereinheit (30) über die erste Spule (11) sendet.

5. Drahtloses Ladegerät (100) nach Anspruch 1, wobei die kammförmige Abschirmung (13) mehrere parallele Segmente (131) aufweist.

6. Drahtloses Ladegerät (100) nach Anspruch 1, wobei die kammförmige Abschirmung (13) als ein Schaltungspfad auf einer Leiterplatte gedruckt ist.

7. Drahtloses Ladegerät (100) nach Anspruch 1, wobei mindestens zwei kammförmige Abschirmungen (13) verwendet werden, die in unterschiedlichen Richtungen gegeneinander angeordnet sind und die in verschiedenen Schichten des drahtlosen Ladegeräts (100) angeordnet sind.

8. Drahtloses Ladegerät (100) nach Anspruch 1, wobei die kammförmige Abschirmung (13) als eine kapazitive Sensor-Elektrode (20) verwendet wird, wenn sich das drahtlose Ladegerät (100) in dem Bereitschaftsmodus befindet.

9. Verfahren zum Kombinieren von Funktionen eines Abschirmens vor elektrischer Strahlung und eines kapazitiven Erfassens, wobei das Verfahren aufweist:
(a) ein Erfassen einer Kapazitätsvariante zwischen einer kammförmigen Abschirmung (13) des drahtlosen Ladegeräts (100) und der Umgebung über einen kapazitiven Sensor (20), der mit der kammförmigen Abschirmung (13) in einem Bereitschaftsmodus verbunden ist,
(b) ein Übertragen eines Ping-Signals mit einer Steuerung, um eine elektronischen Vorrichtung (40) zu bestätigen, wenn die Kapazitätsvariante eine vorgegebene Schwelle überschreitet,
(c) ein Umschalten der kammförmigen Abschirmung (13), um mit einer Masse (31) verbunden zu werden, und ein Einschalten des drahtlosen Ladegeräts (100), um eine drahtlose Aufladung durchzuführen, wenn eine Antwort auf das Ping-Signal in einem Lademodus empfangen wird, und
(d) ein Umschalten des drahtlosen Ladegeräts (100) zurück in den Bereitschaftsmodus, wenn die Kapazitätsvariante unter der vorgegebenen Schwelle liegt.

10. Verfahren nach Anspruch 9, wobei das drahtlose Ladegerät (100) mit einer Steuerung verbunden ist, um die Kapazitätsvariante aufzuzeichnen und den Schalter (32) zwischen dem Bereitschaftsmodus und dem Lademodus auszuführen.

11. Verfahren nach Anspruch 9, wobei der kapazitive Sensor (20) ein kapazitiver Sensor einer integrierten Schaltung ist.

12. Verfahren nach Anspruch 9, wobei die Steuereinheit (30) ferner einen Schalter (32) aufweist, der zwischen der Masse (31) und der kammförmigen Abschirmung (13) elektrisch verbunden ist.

13. Verfahren nach Anspruch 12, wobei der Schalter (32) ein Transistor ist.

14. Verfahren nach Anspruch 9, wobei die kammförmige Abschirmung (13) mehrere parallele Segmente (131) aufweist.

15. Verfahren nach Anspruch 9, wobei die kammförmige Abschirmung (13) als ein Schaltungspfad auf einer Leiterplatte gedruckt worden ist.

16. Verfahren nach Anspruch 9, wobei mindestens zwei kammförmige Abschirmungen (13) verwendet werden, die in unterschiedlichen Richtungen gegeneinander angeordnet sind und die in verschiedenen Schichten des drahtlosen Ladegeräts (100) angeordnet sind.

## Revendications

1. Chargeur sans fil (100) pour charger un dispositif électronique (40) avec une seconde bobine (14), comprenant :
un module de charge (10), comprenant une première bobine (11) couplée électromagnétiquement à la seconde bobine (14), une zone de mise en place (12) pour le dispositif électronique (40) à placer à l'opposé de la première bobine (11), et un blindage en forme de peigne (13) situé entre la zone de mise en place (12) et la première bobine (11) ;
un capteur capacitif (20), qui est connecté au blindage en forme de peigne (13) pour détecter la variante de capacité entre le blindage en forme de peigne (13) et l'environnement ; et
une unité de commande (30), qui est connectée au blindage en forme de peigne (13) et au capteur capacitif (20) et enregistre la variante de capacité ;
dans lequel, lorsque la variante de capacité dépasse un seuil prédéfini, l'unité de commande (30) envoie un signal d'impulsion sonar au dispositif électronique (40), et si le dispositif électronique (40) répond, l'unité de commande (30) commute le module de charge (10) d'un mode de veille à un mode de charge pour charger sans fil le dispositif électronique (40) et commute le blindage en forme de peigne (13) pour qu'il soit connecté à une masse (31).

2. Chargeur sans fil (100) selon la revendication 1, dans lequel l'unité de commande (30) comprend en outre un commutateur (32), qui est connecté électriquement entre la masse (31) et le blindage en forme de peigne (13).

3. Chargeur sans fil (100) selon la revendication 2, dans lequel le commutateur (32) est un transistor.

4. Chargeur sans fil (100) selon la revendication 1, dans lequel le signal d'impulsion sonar est envoyé depuis l'unité de commande (30) via la première bobine (11).

5. Chargeur sans fil (100) selon la revendication 1, dans lequel le blindage en forme de peigne (13) comprend une pluralité de segments parallèles (131).

6. Chargeur sans fil (100) selon la revendication 1, dans lequel le blindage en forme de peigne (13) est imprimé sous forme de parcours de circuit sur une carte de circuit imprimé.

7. Chargeur sans fil (100) selon la revendication 1, dans lequel au moins deux blindages en forme de peigne (13) sont utilisés, positionnés avec des directions différentes l'un contre l'autre et situés dans des couches différentes du chargeur sans fil (100).

8. Chargeur sans fil (100) selon la revendication 1, dans lequel le blindage en forme de peigne (13) est utilisé en tant qu'électrode de capteur capacitif (20) lorsque le chargeur sans fil (100) est dans le mode de veille.

9. Procédé de combinaison de fonctions de blindage contre le rayonnement électrique et de détection de capacité dans un chargeur sans fil (100), comprenant :
(a) la détection d'une variante de capacité entre un blindage en forme de peigne (13) du chargeur sans fil (100) et l'environnement via un capteur capacitif (20) connecté au blindage en forme de peigne (13) dans un mode de veille ;
(b) la transmission d'un signal d'impulsion sonar pour confirmer qu'un dispositif électronique (40) doit être chargé lorsque la variante de capacité dépasse un seuil prédéfini par un dispositif de commande ;
(c) la commutation du blindage en forme de peigne (13) pour qu'il soit connecté à une masse (31) et la mise sous tension du chargeur sans fil (100) pour réaliser une charge sans fil lorsqu'une réponse au signal d'impulsion sonar est reçue dans un mode de charge ; et
(d) la commutation du chargeur sans fil (100) pour qu'il revienne au mode de veille lorsque la variante de capacité est inférieure au seuil prédéfini.

10. Procédé selon la revendication 9, dans lequel le chargeur sans fil (100) est connecté à un dispositif de commande pour enregistrer la variante de capacité et pour réaliser le commutateur (32) entre le mode de veille et le mode de charge.

11. Procédé selon la revendication 9, dans lequel le capteur capacitif (20) est un circuit intégré à capteur capacitif.

12. Procédé selon la revendication 9, dans lequel l'unité de commande (30) comporte en outre un commutateur (32), qui est connecté électriquement entre la masse (31) et le blindage en forme de peigne (13).

13. Procédé selon la revendication 12, dans lequel le commutateur (32) est un transistor.

14. Procédé selon la revendication 9, dans lequel le blindage en forme de peigne (13) comprend une pluralité de segments parallèles (131).

15. Procédé selon la revendication 9, dans lequel le blindage en forme de peigne (13) est imprimé sous forme de parcours de circuit sur une carte de circuit imprimé.

16. Procédé selon la revendication 9, dans lequel au moins deux blindages en forme de peigne (13) sont utilisés, positionnés avec des directions différentes l'un contre l'autre et situés dans des couches différentes du chargeur sans fil (100).
